# EUROPEAN PATENT APPLICATION

(11) **EP 4 656 415 A1**
(43) Date of publication of application: **03.12.2025**
(21) Application number: 25169829.6
(22) Date of filing: 10.04.2025
(51) Int. Cl.: B60D 1/24, B60D 1/62, B60R 11/00, B60W 60/00

(54) **AN ADAPTIVE CARGO CARRIER AND TOW PACKAGE CONFIGURATOR**

(30) Priority: 31.05.2024 US 202418679583
(71) Applicant: Volvo Car Corporation, 405 31 Göteborg (SE)
(72) Inventor: MAXVALL, Marcus, 405 31 Göteborg (SE); NIELSEN, Filip, 405 31 Göteborg (SE); TÖRMÄNEN, Mikael, 405 31 Göteborg (SE); LANDIN, Karolina, 405 31 Göteborg (SE)
(74) Representative: Nederlandsch Octrooibureau

(57) **Abstract**

A system (130) that adaptively configures a cargo carrier and tow package. A vehicle (102) includes one or more cargo connectors (124) configurable to receive a cargo assembly (122, 128, 132, 302), where the cargo assembly (122, 128, 132, 302) is configurable to carry or tow at least one cargo item. The system (130) includes one or more processors (1102) and logic encoded in one or more non-transitory computer-readable storage media for execution by the one or more processors (1102). The logic when executed is operable to cause the one or more processors (1102) to perform operations including receiving cargo information (510) associated with the at least one cargo item to be coupled to the cargo assembly (122, 128, 132, 302), verifying carrying and towing requirements of the vehicle (102) against the cargo information (510), and providing cargo assembly information to a user of the vehicle (102), wherein the cargo assembly information comprises a type of cargo assembly (122, 128, 132, 302) and installation information.

## Description

### INTRODUCTION

The present disclosure relates generally to the automotive field. When a vehicle owner wants to carry or tow cargo, it is typically necessary to attach a cargo carrier or tow rig to the vehicle. The assemblies associated with a cargo carrier or tow rig can be complex to assemble and install, and they are not typically optimized in terms of size and weight for the cargo item or items to be carried or towed. Thus, such assemblies may be overkill, adding excess weight once installed and/or improperly installed. Furthermore, vehicle carrying and towing capabilities of the vehicle may not be known by a vehicle operator without resorting to outside references.

The present introduction is provided as background context only and is not intended to be limiting in any manner. It will be readily apparent to those of ordinary skill in the art that the concepts and principles of the present disclosure may be implemented in other applications and contexts equally.

### SUMMARY

The present disclosure relates to a system for adaptively configuring a cargo carrier and tow package. As described in more detail herein, embodiments facilitate a user or driver in attaching and configuring a cargo carrier and/or tow package. When the user provides cargo information to the system, the system verifies carrying and towing requirements of the vehicle against the cargo information, and providing cargo assembly information to the user of the vehicle, where the cargo assembly information includes the type of cargo assembly needed for the cargo, specifications for the cargo assembly, and installation information.

In one illustrative embodiment, the present disclosure provides a vehicle comprising: one or more cargo connectors configurable to receive a cargo assembly, wherein the cargo assembly is configurable to carry or tow at least one cargo item; and a system comprising one or more processors and logic encoded in one or more non-transitory computer-readable storage media for execution by the one or more processors. The logic when executed is operable to cause the one or more processors to perform operations comprising: receiving cargo information associated with the at least one cargo item to be coupled to the cargo assembly; verifying carrying and towing requirements of the vehicle against the cargo information; and providing cargo assembly information to a user of the vehicle, wherein the cargo assembly information comprises a type of cargo assembly and installation information. Optionally, in some embodiments, the logic when executed is further operable to cause the one or more processors to perform operations comprising alerting the user of the vehicle if the at least one cargo item does not meet the carrying and towing requirements based on the cargo information. In some embodiments, the logic when executed is further operable to cause the one or more processors to perform operations comprising: determining that the one or more cargo connectors are coupled to the cargo assembly; and verifying that a configuration of a coupling between the one or more cargo connectors and the cargo assembly meets predetermined requirements. In some embodiments, the logic when executed is further operable to cause the one or more processors to perform operations comprising: determining that the one or more cargo connectors are coupled to the cargo assembly; determining that the cargo assembly is coupled to the at least one cargo item; and verifying that a configuration of a coupling between the one or more cargo connectors and the cargo assembly and that a configuration of a coupling between the cargo assembly and the at least one cargo item meet predetermined requirements. In some embodiments, the logic when executed is further operable to cause the one or more processors to perform operations comprising verifying that a configuration of a coupling between the one or more cargo connectors and the cargo assembly and a configuration of a coupling between the cargo assembly and the at least one cargo item meet predetermined requirements based on one or more perception sensor devices associated with the one or more cargo connectors. In some embodiments, the logic when executed is further operable to cause the one or more processors to perform operations comprising: receiving route information in association with the vehicle transporting the at least one cargo item; and modifying vehicle operating parameters for transporting the at least one cargo item based on one or more of the cargo information, the cargo assembly information, and the route information. In some embodiments, the logic when executed is further operable to cause the one or more processors to perform operations comprising: monitoring the cargo assembly and the at least one cargo item while the vehicle is transporting the at least one cargo item; and alerting the user of the vehicle to any dangerous events that arise in association with a coupling between the one or more cargo connectors and the cargo assembly or in association with a coupling between the cargo assembly and the at least one cargo item. In some embodiments, the cargo assembly is an aftermarket cargo assembly.

In another illustrative embodiment, the present disclosure provides a connector assembly for a vehicle. The connector assembly comprises: one or more cargo connectors configurable to receive a cargo assembly, wherein the cargo assembly is configurable to carry or tow at least one cargo item; and one or more perception sensor devices associated with the one or more cargo connectors, wherein the one or more perception sensor devices communicate with a system comprising one or more processors and logic encoded in one or more non-transitory computer-readable storage media for execution by the one or more processors. The logic when executed is operable to cause the one or more processors to perform operations comprising: receiving cargo information associated with the at least one cargo item to be coupled to the cargo assembly; verifying carrying and towing requirements of the vehicle against the cargo information; and providing cargo assembly information to a user of the vehicle, wherein the cargo assembly information comprises a type of cargo assembly and installation information. Optionally, in some embodiments, the logic when executed is further operable to cause the one or more processors to perform operations comprising alerting the user of the vehicle if the at least one cargo item does not meet the carrying and towing requirements based on the cargo information. In some embodiments, the logic when executed is further operable to cause the one or more processors to perform operations comprising: determining that the one or more cargo connectors are coupled to the cargo assembly; and verifying that a configuration of a coupling between the one or more cargo connectors and the cargo assembly meets predetermined requirements. In some embodiments, the logic when executed is further operable to cause the one or more processors to perform operations comprising: determining that the one or more cargo connectors are coupled to the cargo assembly; determining that the cargo assembly is coupled to the at least one cargo item; and verifying that a configuration of a coupling between the one or more cargo connectors and the cargo assembly and that a configuration of a coupling between the cargo assembly and the at least one cargo item meet predetermined requirements. In some embodiments, the logic when executed is further operable to cause the one or more processors to perform operations comprising verifying that a configuration of a coupling between the one or more cargo connectors and the cargo assembly and a configuration of a coupling between the cargo assembly and the at least one cargo item meet predetermined requirements based on one or more perception sensor devices associated with the one or more cargo connectors. In some embodiments, the logic when executed is further operable to cause the one or more processors to perform operations comprising: receiving route information in association with the vehicle transporting the at least one cargo item; and modifying vehicle operating parameters for transporting the at least one cargo item based on one or more of the cargo information, the cargo assembly information, and the route information. In some embodiments, the logic when executed is further operable to cause the one or more processors to perform operations comprising: monitoring the cargo assembly and the at least one cargo item while the vehicle is transporting the at least one cargo item; and alerting the user of the vehicle to any dangerous events that arise in association with a coupling between the one or more cargo connectors and the cargo assembly or in association with a coupling between the cargo assembly and the at least one cargo item. In some embodiments, the cargo assembly is an aftermarket cargo assembly.

In a further illustrative embodiment, the present disclosure provides a computer-implemented method for facilitating couplings among one or more cargo connectors of a vehicle, a cargo assembly, and at least one cargo item, the method comprising: receiving cargo information associated with the at least one cargo item to be coupled to the cargo assembly; verifying carrying and towing requirements of the vehicle against the cargo information; and providing cargo assembly information to a user of the vehicle, wherein the cargo assembly information comprises a type of cargo assembly and installation information, wherein the one or more cargo connectors are configurable to receive the cargo assembly, and wherein the cargo assembly is configurable to carry or tow the at least one cargo item. Optionally, in some embodiments, the method further comprises alerting the user of the vehicle if the at least one cargo item does not meet the carrying and towing requirements based on the cargo information. In some embodiments, the method further comprises determining that the one or more cargo connectors are coupled to the cargo assembly; and verifying that a configuration of a coupling between the one or more cargo connectors and the cargo assembly meets predetermined requirements. In some embodiments, the method further comprises determining that the one or more cargo connectors are coupled to the cargo assembly; determining that the cargo assembly is coupled to the at least one cargo item; and verifying that a configuration of a coupling between the one or more cargo connectors and the cargo assembly and that a configuration of a coupling between the cargo assembly and the at least one cargo item meet predetermined requirements.

### BRIEF DESCRIPTION OF THE DRAWINGS

The present disclosure is illustrated and described with reference to the various drawings, in which like reference numbers are used to denote like assembly components and/or method steps, as appropriate.
FIG. 1 is a side-view block diagram of an example environment including a vehicle and a trailer.
FIG. 2 is a top-view block diagram of the example environment including a vehicle and a trailer.
FIG. 3 is a side-view block diagram of an example environment including a vehicle and a bike rack.
FIG. 4 is a flow chart for ensuring proper configuration of couplings associated with connectors, cargo assemblies, and cargo items of a vehicle.
FIG. 5 is a block diagram of an environment, showing an interior perspective toward the front of a vehicle.
FIG. 6 is a flow chart for verifying proper configurations of couplings between cargo connectors, cargo assemblies, and cargo items of a vehicle.
FIG. 7 is a flow chart for assisting a driver in transporting one or more cargo items.
FIG. 8 is a flow chart for ensuring safety during transportation of one or more cargo items.
FIG. 9 is a block diagram of an example high-level architecture for ensuring proper configuration of couplings associated with connectors, cargo assemblies, and cargo items of a vehicle.
FIG. 10 is a block diagram of an example network environment of the present disclosure.
FIG. 11 is a block diagram of an example computing system of the present disclosure.

### DETAILED DESCRIPTION

Embodiments described herein adaptively configure a cargo carrier package and/or cargo tow package. As described in more detail herein, embodiments facilitate a user or driver in attaching and configuring a cargo carrier and/or tow package

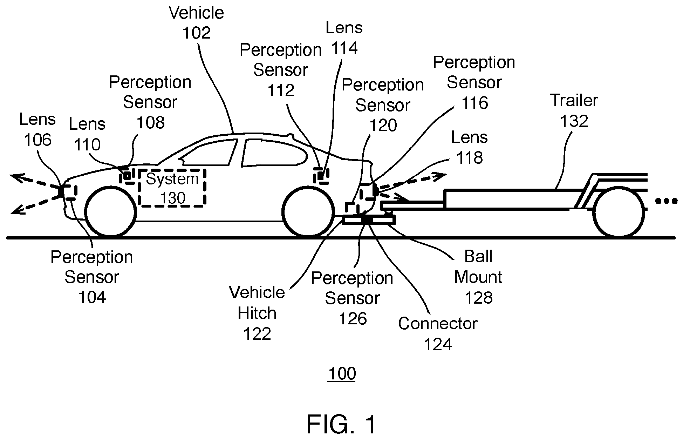

FIG. 1 is a side-view block diagram of an example environment 100 including a vehicle 102 and a trailer. The vehicle 102 includes perception sensors that are positioned at various locations around the exterior of the vehicle 102. For example, a perception sensor 104 having a lens 106 is positioned at the front of the vehicle 102 (e.g., on the bumper or grill). A perception sensor 108 having a lens 110 is positioned at the left side of the vehicle 102. Another perception sensor 112 having a lens 114 is also positioned at the left side of the vehicle 102. There are other perception sensors (not shown) positioned at the right side of the vehicle 102. A perception sensor 116 having a lens 118 is positioned at the rear of the vehicle 102 (e.g., on the bumper or above the bumper).

In various embodiments, the vehicle 102 also includes a perception sensor 120 at a connection point between the vehicle 102 and a cargo assembly. In various embodiments, the cargo assembly may include a vehicle hitch 122, one or more connectors such as a connector 124, one more perception sensors such as a perception sensor 126, and a ball mount 128. As shown, the cargo assembly is positioned at the rear of the vehicle 102.

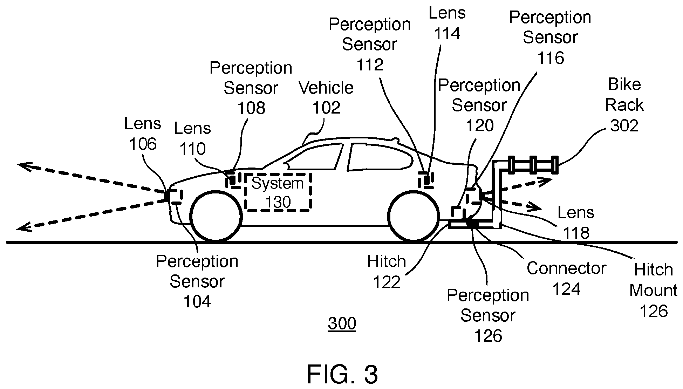

In this particular example embodiment, the cargo assembly includes a trailer 132. The trailer 132 may be used to transport large cargo items such as an automobile, a boat, a cargo shipping container, etc. The particular type of components or equipment of the cargo assembly may vary, depending on the particular implementation. For example, as described in more detail below in connection with FIG. 3, instead of a trailer, the cargo assembly may include a back rack, for example.

In various embodiments, the vehicle 102 includes a connector assembly that includes one or more cargo connectors at one or more connection points on the vehicle 102. In various embodiments, the cargo connectors are configurable to connect to or receive a cargo assembly that is configurable to carry or tow one or more cargo items. For example, the cargo connectors may include one or more holes or receptacles in the body of the vehicle 102 that receive one or more portions of a cargo assembly. The cargo connectors may include a hardware fastening mechanism that functions to fasten and secure the cargo assembly to a portion of the vehicle such as the chassis of the vehicle 102. The number of holes/receptacles, the number and types of hardware involved in the hardware fastening mechanism, and their configurations may vary, depending on the particular implementation.

In various embodiments, the connector assembly may include one or more perception sensors such as perception sensor 120. The number of perception sensors and their positions within the connector assembly may vary, depending on the particular implementation. As described in more detail herein, the perception sensor 120 detects the existence and nature of the engagement or connection between the vehicle 102 and the cargo assembly, and communicates information associated with the connection to the system 130. For example, the perception sensor 120 may detect that the vehicle hitch 122 is connected to the vehicle 102. With respect to proper engagement or connection, the perception sensor 120 may also detect whether the vehicle hitch 122 is seated properly against the vehicle 130. The perception sensor 120 may also detect whether the vehicle hitch 122 securely fastened to the vehicle 130.

The connector assembly connection point between the vehicle 102 and the cargo assembly (e.g., between the vehicle 102 and the vehicle hitch 122) may include multiple connection points or cargo connectors configurable to receive a cargo assembly, where the cargo assembly is configurable to carry or tow at least one cargo item. The cargo connectors may include any needed receptacles and/or hardware such as mounting mechanisms for properly coupling a cargo assembly to the vehicle.

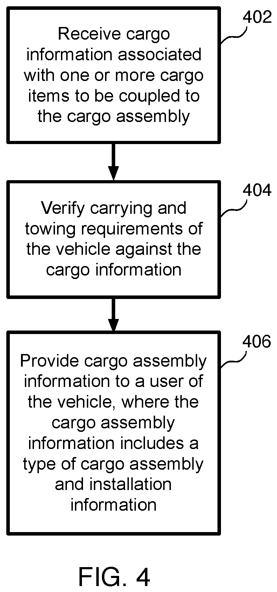

As described in more detail below in connection with FIG. 4, the system 130 receives cargo information associated with one or more cargo items to be coupled to the cargo assembly (e.g., vehicle hitch 122, connector 124, perception sensor 126, ball mount 128, etc.). The system 130 verifies carrying and towing requirements of the vehicle against the cargo information. The system 130 also provides cargo assembly information to a user of the vehicle based on the cargo items. In various embodiments, the cargo assembly information includes the type of cargo assembly, specifications for the cargo assembly, and installation information, and any other information for transporting the cargo.

The number of cargo assemblies and the particular location of each cargo assembly may vary, depending on the particular implementation. For example, a cargo assembly may be positioned at the top of the vehicle 102. Also, the number of perception sensors positioned on the vehicle 102 may vary, depending on the particular implementation. Also, the positions of the perception sensors on the vehicle 102 may vary, depending on the particular implementation. For example, one or more perception sensors maybe positioned or mounted on the roof of the vehicle 102, underneath the vehicle 102, etc.

In various embodiments, cargo assemblies described herein may be made by the same manufacturer of the vehicle 102. A given cargo assembly may also be an aftermarket cargo assembly. Cargo assemblies may be a mix of cargo assemblies and components made by the same manufacturer of the vehicle 102 and aftermarket cargo assemblies. For example, a vehicle hitch and a trailer may be made by different manufacturers.

In various embodiments, one or more perception sensors may be positioned at interior portions of the vehicle. For example, as indicated above, one or more of the perception sensors may be positioned inside the vehicle with views through one or more windows (e.g., behind the front windshield, near the rear-view mirror, etc.). As such, the perception sensors capture various types vantage points as well as various types of data associated with the external environment 100. Such data may include objects such as other vehicles, people, etc., weather elements such as rain, snow, etc. The system may communicate information such as warnings associated such data to the driver via the infotainment system. Such information may be conveyed visually and/or auditorily, depending on the particular implementation.

As shown, the vehicle 202 includes a system 130. The system 302 controls these various perception sensors positioned around the exterior of the vehicle 102. Being positioned at the exterior portion of the vehicle 104 means that at least one portion of the perception sensors (e.g., their respective lenses, associated vehicle connection points, etc.) are exposed to the environment 100, or external environment 100. In some embodiments, one or more perception sensors may be positioned inside the vehicle with a view of the external environment 100 through one or more windows, etc. Different example perception sensors are described in more detail below.

In various embodiments, the system 102 may utilize multiple types of perception sensors to capture data on the external environment 100. Any sensing methodology may be used, and the particular sensing methodology will depend on the particular implementation. For example, in various embodiments, one or more perception sensors may include one or more image sensing perception sensors or cameras, radar detectors, light detection and ranging (Lidar) cameras, and/or ultrasonic cameras, or any combination thereof. The system may utilize image sensing perception sensors or cameras and/or infrared (IR) perception sensors or cameras and/or radar perception sensors or cameras.

Various perception sensors are described herein in the context of image sensing perception sensors such as cameras, etc., to assist the driver while driving. In various embodiments, the system may utilize any one or more of these perception sensors and/or other types of sensors and cameras to collect data described herein. For example, such collected data may include data on any objects outside of the vehicle 102, including objects on the road. For example, such objects may include road surface features (e.g., bumps, potholes, etc.), environmental features (e.g., trash, alive or dead animals, rocks, boulders, etc.). Such objects may also include other vehicles or people. The data may include Lidar data and well as images. The images may be a continuous series of images, which may include video.

In various embodiments, the perception sensors of the vehicle1202 may be referred to as client devices, which may communicate with the system 130. The cargo assembly may include electronics and other hardware that communicate data associated with connections between the vehicle 102 and the cargo assembly, and data associated with connections between the cargo assembly and one or more cargo items. Such communications may be facilitated via any suitable communication network (not shown) such as a wired network, a Bluetooth network, a Wi-Fi network, etc., or any combination thereof.

For ease of illustration, FIG. 1 shows one block for the system 102 and several blocks for the perception sensors 104, 108, 112, 116, 120, and 126. These blocks may represent multiple systems and perception sensors. In other embodiments, environment 100 may not have all of the components shown and/or may have other elements including other types of elements instead of, or in addition to, those shown herein.

While system 130 performs embodiments described herein, in other embodiments, any suitable component or combination of components associated with system 130 or any suitable processor or processors associated with system 130 may facilitate performing the embodiments described herein.

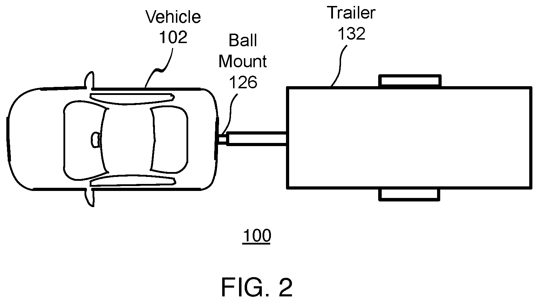

FIG. 2 is a top-view block diagram of the example environment 100 including the vehicle 102 and the trailer 132 of FIG. 1. The vehicle 102 is coupled to the cargo assembly, where the ball mount 126 of the cargo assembly is shown. The cargo assembly is coupled to the cargo item or trailer 132.

FIG. 3 is a side-view block diagram of an example environment 300 including the vehicle 102 of FIGS. 1 and FIG. 2 and a bike rack. Similar to FIG. 1, the vehicle 102 includes the perception sensor 104, the lens 106, the perception sensor 108, the lens 110, the perception sensor 112, the lens 114, the perception sensor 116, lens 118. The vehicle 102 also includes the perception sensor 120 at the connection point between the vehicle 102 and a cargo assembly. In various embodiments, the cargo assembly may include a vehicle hitch 122, a connector 124, and one more perception sensors such as perception sensor 126.

In this particular example embodiment, the cargo assembly includes a bike rack 302. The bike rack 302 may be used to transport items such as bicycles, etc. The particular type of components of the cargo assembly may vary, depending on the particular implementation.

FIG. 4 is a flow chart for ensuring proper configuration of couplings associated with connectors, cargo assemblies, and cargo items of a vehicle. Referring to both FIGS. 1, 2, 3, and 4, a method is initiated at block 402, where a system such as the system 130 receives cargo information associated with one or more cargo items to be coupled to a cargo assembly. For example, a cargo item may include a vehicle such as a car, boat, motorcycle, bicycle, etc. The user may enter information into a user interface associated with the system 130. The information may include a general description of the cargo item (e.g., sedan car, 20-foot boat, mountain bike, etc.). The information may include more specific information such as a make and model number of the cargo item. The information may also include specifications of the cargo item including size and weight information.

At block 404, the system 130 verifies the carrying and towing requirements of the vehicle against the cargo information. For example, if the cargo item is a car, the system may determine that the towing capacity is sufficient for the car. **In** some embodiments, the system may prompt the user to enter addition details associated with the cargo item. Such details may include a make, a model, a weight, a size, dimensions, etc., for example.

At block 406, the system 130 provides cargo assembly information to a user of the vehicle based on the cargo item or cargo items to be transported the vehicle 102. **In** various embodiments, the cargo assembly information includes the type of cargo assembly and installation information. The type of cargo assembly may be a list of recommended makes and models of a cargo assembly. **In** the example above in connection with FIGS. 1 and 2, the cargo assembly may include the trailer 132. The trailer 132 may be one that the system 130 recommends the user install for transporting the cargo (e.g., another vehicle, a boat, a storage container, etc.). In the example above in connection with FIG. 3, the cargo assembly may include the bike rack 302. The bike rack 302 may be one that the system 130 recommends the user install for transporting the cargo (e.g., one or more bicycles, etc.).

In various embodiments, the system 130 may provide the user with a list of appropriate parts or equipment to assemble and the proper configuration for a cargo assembly and for couplings between the vehicle, the cargo assembly, and the cargo items. As described in more detail herein, the system 130 may also provide instructions for properly transporting the cargo over a particular driving route, with minimal possibility of errors and with minimal unnecessary weight. The system 130 may also provide the user with information associated with fueling and charge range if the vehicle 102 is an electric vehicle.

In some scenarios, a given cargo assembly may be modular such as a modular bike rack. The cargo assembly may have multiple parts or equipment that are optional with associated corresponding configurations for different situations. For example, a modular bike rack may carry a varying number of bikes (e.g., one bike, two bikes, three bikes, etc.). In order to minimize unnecessary weight, the system 130 may recommend the appropriate parts for the number of bikes, for example.

In some embodiments, the system 130 may provide the user with recommended sources for purchasing and/or renting cargo assembly components such as a bike rack or trailer, etc. The system 130 may also provide vendor names, addresses, and phone numbers, as well as professional installers.

In various embodiments, the system 130 may alert the user of the vehicle 102 if one or more cargo items that the user entered into the system 102 do not meet the carrying and towing requirements based on the cargo information. For example, the user may have inputted a van that weights more than the towing capacity of the vehicle 102. The system 130 would indicate as such. The system may provide the user with alternative solutions such as an alternative towing vehicle.

In various embodiments, to alert the user of the vehicle if a cargo item does not meet the carrying and towing requirements based on the cargo information, the system may display the alert on the infotainment display 508. The system may include alerts along with any other cargo information 510 shown on the infotainment display 508. Such cargo information may include, for example, the reasons that the requirements were not met (e.g., weight overages, etc.) and optional solutions. In some embodiments, the system may also alert the user using an auditor sound via the infotainment system. As such, the user may look at any relevant alert-associated information on the infotainment display 508.

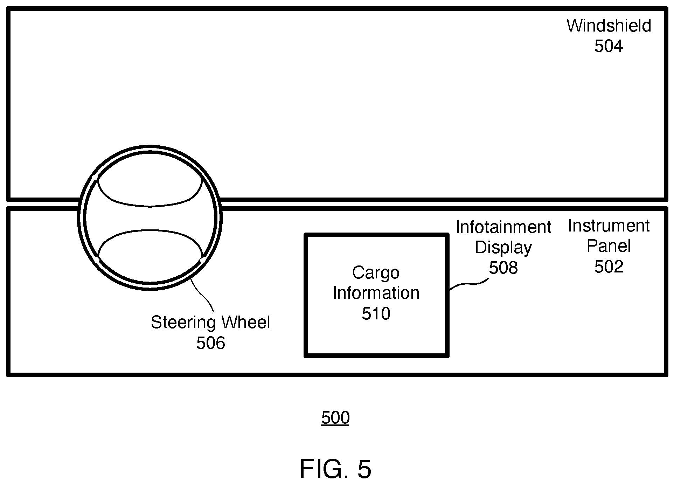

FIG. 5 is a block diagram of an environment 500, showing an interior perspective toward the front of a vehicle, such as the vehicle 102 of FIGS. 1, 2, and 3. Shown is a dashboard or instrument panel 502, a windshield 504, a steering wheel 506, and an infotainment display 508.

As indicated above, if the system 130 alerts the user of the vehicle if a cargo item does not meet the carrying and towing requirements based on the cargo information, the system may display the alert on the infotainment display 508. Also, if the system 130 alerts the user of the vehicle to any dangerous events that arise in association with a coupling between the one or more cargo connectors and the cargo assembly or in association with a coupling between the cargo assembly and the at least one cargo item, the system may display the alert on the infotainment display 508. The system may include these alerts along with any other cargo information 510 shown on the infotainment display 508. In some embodiments, the system may also alert the user using an auditor sound via the infotainment system. As such, the user may look at any relevant alert-associated information on the infotainment display 508.

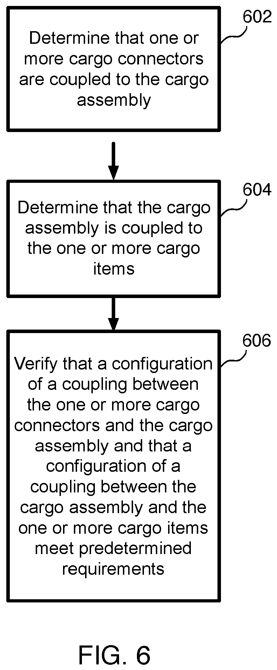

FIG. 6 is a flow chart for verifying proper configurations of couplings between cargo connectors, cargo assemblies, and cargo items of a vehicle. Referring to FIGS. 1, 2, 3, and 6, a method is initiated at block 602, where a system such as the system 130 determines that one or more cargo connectors are coupled to the cargo assembly. In the example embodiment of FIGS. 1 and 2, the system 130 may determine that the cargo connector is coupled to the cargo assembly shown, which includes the trailer 132. In the example embodiment of FIG. 3, the system 130 may determine that the cargo connector is coupled to the cargo assembly shown, which includes the bike rack 302.

At block 604, the system 130 determines that the cargo assembly is coupled to the one or more cargo items. In the example embodiment of FIGS. 1 and 2, the system 130 may determine that the trailer 132 is loaded with a boat. In the example embodiment of FIG. 3, the system 130 may determine that the bike rack 302 is carrying three bicycles. In various embodiments, the system my make such determinations utilizing one or more perception sensors such as perception sensors 120 and perception sensor 126. For example, one or more of these perception sensors may function to detect and measure a weight load.

In some embodiments, the system may utilize other perception sensors of the vehicle 102 to determine that the cargo assembly is coupled to the cargo item. For example, the perception sensor 116 may capture an image of a cargo item such as a motorcycle strapped to the trailer 132 (FIGS. 1 and 2). In another example, the perception sensor 116 may capture an image of a cargo item or cargo items such as one or more bicycles hanging on the bike rack 302 (FIG. 3).

At block 606, the system 130 verifies that the configuration of a coupling between the one or more cargo connectors and the cargo assembly meets predetermined requirements. For example, the system may utilize one or more perception sensors such as the perception sensor 120 to detect that the vehicle hitch 122 is properly seated against the appropriate cargo connector or connectors of the vehicle 102. There may be a certain number of bolts or other fastening mechanism, where the system determines if these fastening items are present and are providing adequately secured engagement.

The system also verifies that the configuration of a coupling between the cargo assembly and the one or more cargo items meets predetermined requirements. For example, if the cargo item is a motorcycle, the system may utilize the perception sensor 116 to capture an image of the motorcycle to ensure that it is strapped to the trailer 132 in the example shown in FIGS. 1 and 2. In another example, if the cargo item is a bicycle, the system may utilize the perception sensor 116 to capture an image of the bicycle to ensure that it is strapped to or locked into the bike rack 302 in the example shown in FIG. 3.

The order and timing of these verifications my vary, and will depend on the particular implementation. For example, in some embodiments the system 130 may verify that the configuration of the coupling between the one or more cargo connectors and the cargo assembly meets predetermined requirements right after the system 130 determines that the one or more cargo connectors are coupled to the cargo assembly and before the system 130 determines that the cargo assembly is coupled to the at least one cargo item. Alternatively, in some embodiments the system 130 may perform both verifications after system 130 determines that the cargo assembly is coupled to the at least one cargo item.

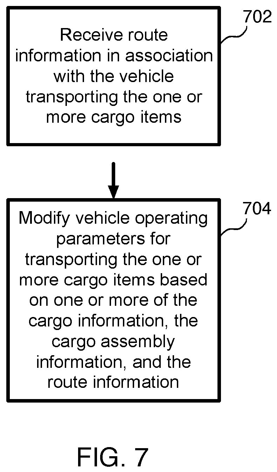

FIG. 7 is a flow chart for assisting a driver in transporting one or more cargo items. Referring to FIGS. 1, 2, 3, and 7, a method is initiated at block 702, where a system such as the system 130 receives route information in association with the vehicle transporting the one or more cargo items. The route information my include a destination address, for example.

At block 704, the system 130 modifies vehicle operating parameters for transporting the one or more cargo items based on one or more of the cargo information, the cargo assembly information, and the route information. For example, if there are alternative routes between the starting location and the destination location, and the system 130 determines that one route is safer and another route is risky, the system may modify vehicle operating parameters to route the vehicle 102 along the safer route. In another example, if the route involves a steep grade, the system 130 may modify vehicle operating parameters to turn on the hazard lights when the vehicle is traveling up or down the steep grade.

In some embodiments, these operating parameters may involve the system 130 automatically executing particular actions. This may include scenarios for example where the vehicle 102 is an autonomous self-driving vehicle, or where some functions such as hazard lights could be turned on and off by the system 130 at appropriate times.

In some embodiments, these operating parameters may involve the system 130 providing an alert or recommendation to the driver via the infotainment system. For example, the system 130 may provide a recommended route to the driver via the infotainment system. In another example, the system 130 may flash a warning when the vehicle 102 approaches a steep grade. The appropriate modifications to the operating parameters of the vehicle 102 may vary, depending on the particular implementation.

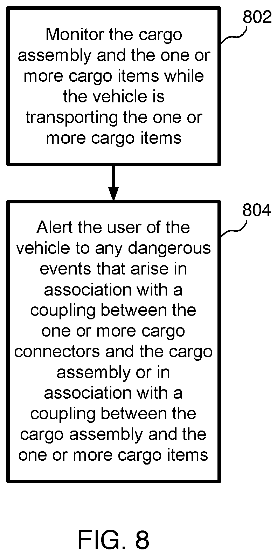

FIG. 8 is a flow chart for ensuring safety during transportation of one or more cargo items. Referring to FIGS. 1, 2, 3, and 8, a method is initiated at block 802, where a system such as the system 130 monitors the cargo assembly and the one or more cargo items while the vehicle is transporting the one or more cargo items. For example, the system 130 may monitor cargo by utilizing the perception sensor 116 to capture images of the cargo item(s) while being transported. Such monitoring is ongoing throughout the duration of a trip.

At block 804, the system 130 alerts the user of the vehicle to any dangerous events that arise in association with a coupling between the one or more cargo connectors and the cargo assembly or in association with a coupling between the cargo assembly and the one or more cargo items. For example, if the perception sensor 120 detects that coupling between the one or more cargo connectors and the cargo assembly becomes misaligned or loose, this would be deemed as a dangerous event. The perception sensor 120 may detect movement or rattling of the cargo assembly at one or more of the cargo connectors, this would be deemed as a dangerous event. As such, the perception sensor 120 sends signals to the system 130 in association with the dangerous event.

In another example, if the perception sensor 116 detects that coupling between the cargo assembly and one or more cargo items becomes loose, this would be deemed as a dangerous event. The perception sensor 116 may capture images of a loose or detached strap around a cargo item such a bike. The perception sensor 116 may capture images of excess movement or swaying of a cargo item such a bike or excess swaying of a trailer. These would also be deemed as dangerous events. As such, the perception sensor 116 sends signals including images to the system 130 in association with the dangerous event. In various embodiments, the system uses any suitable AI model, including any AI, machine learning, and computer vision techniques to monitor and track the couplings between the perception sensors and the couplings described herein.

In various embodiments, if the system 130 alerts the user of the vehicle to any dangerous events that arise in association with a coupling between the one or more cargo connectors and the cargo assembly or in association with a coupling between the cargo assembly and the at least one cargo item, the system may display the alert on the infotainment display 508. The system may include such alerts along with any other cargo information 510 shown on the infotainment display 508. In some embodiments, the system may also alert the user using an auditor sound via the infotainment system. As such, the user may look at any relevant alert-associated information on the infotainment display 508.

Although the steps, operations, or computations may be presented in a specific order, the order may be changed in particular embodiments. Other orderings of the steps are possible, depending on the particular implementation. In some particular embodiments, multiple steps shown as sequential in this specification may be performed at the same time. Also, some embodiments may not have all of the steps shown and/or may have other steps instead of, or in addition to, those shown herein.

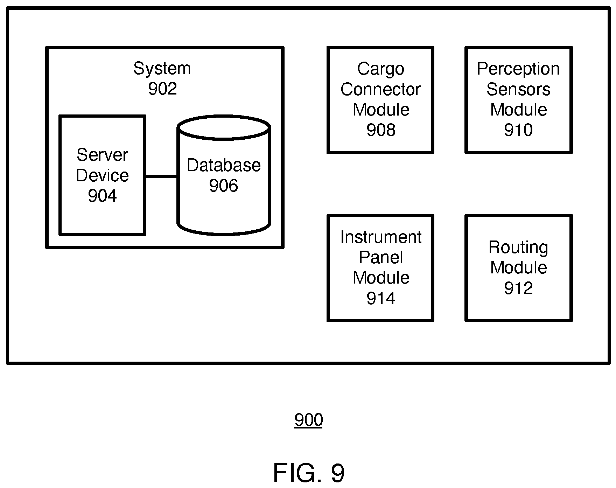

FIG. 9 is a block diagram of an example high-level architecture 900 for ensuring proper configuration of couplings associated with connectors, cargo assemblies, and cargo items of a vehicle. Shown is a system 902, which may be used to implement the system 130 of FIGS. 1, 2 and 3. The system 902 includes a server device 904 and a database 906. Also shown is a cargo connector module 908, a perception sensors module 910, a routing module 912, and an instrument panel module 914. The cargo connector module 908, the perception sensors module 910, the routing module 912, and the instrument panel module 914 may be implemented using a combination of hardware and software. In various embodiments, the software may include and execute any suitable AI model, including any AI, machine learning, and computer vision techniques to ensures proper configuration of couplings associated with connectors, cargo assemblies, and cargo items of a vehicle. The system 902 may utilize the AI model to detect dangerous events in association with couplings associated with connectors, cargo assemblies, and cargo items of a vehicle, and alert and communicate such dangerous events to the driver of the vehicle.

The system 902 communicates data signals and control signals with the cargo connector module 908, the perception sensors module 910, the routing module 912, and the instrument panel module 914 via the server device 904. In various embodiments, the system 902 may utilize any suitable cloud and mobile device messaging and links as needed to communicate with the driver, in addition to the infotainment system. The database 906 may be used to store various types of information such as proper and settings in association with connectors, cargo assemblies, and cargo items of a vehicle, as well as AI training information, for example.

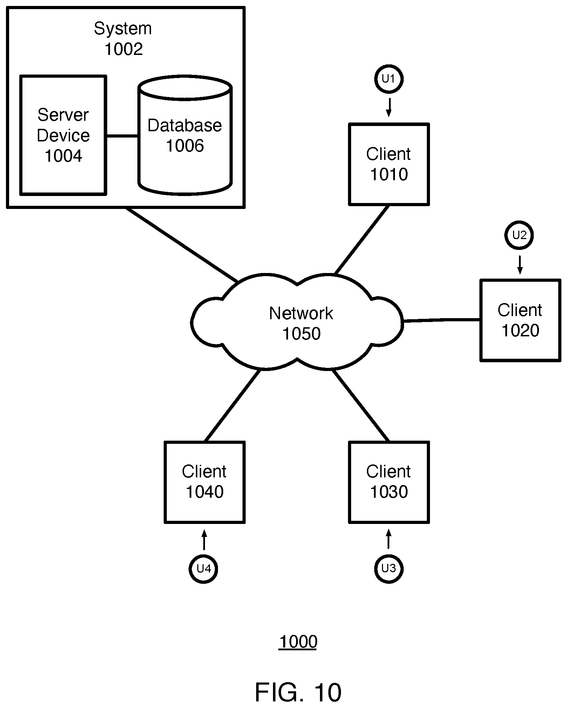

FIG. 10 is a block diagram of an example network environment 1000 of the present disclosure. In some embodiments, network environment 1000 includes a system 1002, which includes a server device 1004 and a database 1006. In various embodiments, system 1002 may be used to implement the system 302 of FIG. 2 and/or the system 802 of FIG. 8, as well as to perform embodiments described herein. Network environment 1000 also includes client devices 1010, 1020, 1030, and 1040, which may communicate with system 1002 and/or may communicate with each other directly or via system 1002. The client devices 1010, 1020, 1030, and 1040 may be used to implement the cargo connectors, the cargo assembly, perception sensors, and the infotainment system. Network environment 1000 also includes a network 1050 through which system 1002 and client devices 1010, 1020, 1030, and 1040 communicate. Network 1050 may be any suitable communication network such as a Wi-Fi network, Bluetooth network, the Internet, etc.

For ease of illustration, FIG. 10 shows one block for each of system 1002, server device 1004, and network database 1006, and shows four blocks for client devices 1010, 1020, 1030, and 1040. Blocks 1002, 1004, and 1006 may represent multiple systems, server devices, and network databases. Also, there may be any number of client devices. In other embodiments, environment 1000 may not have all of the components shown and/or may have other elements including other types of elements instead of, or in addition to, those shown herein.

While server device 1004 of system 1002 performs embodiments described herein, in other embodiments, any suitable component or combination of components associated with system 1002 or any suitable processor or processors associated with system 1002 may facilitate performing the embodiments described herein.

In the various embodiments described herein, a processor of system 1002 and/or a processor of any client device 1010, 1020, 1030, and 1040 cause the elements described herein (e.g., information, etc.) to be displayed in a user interface on one or more display screens.

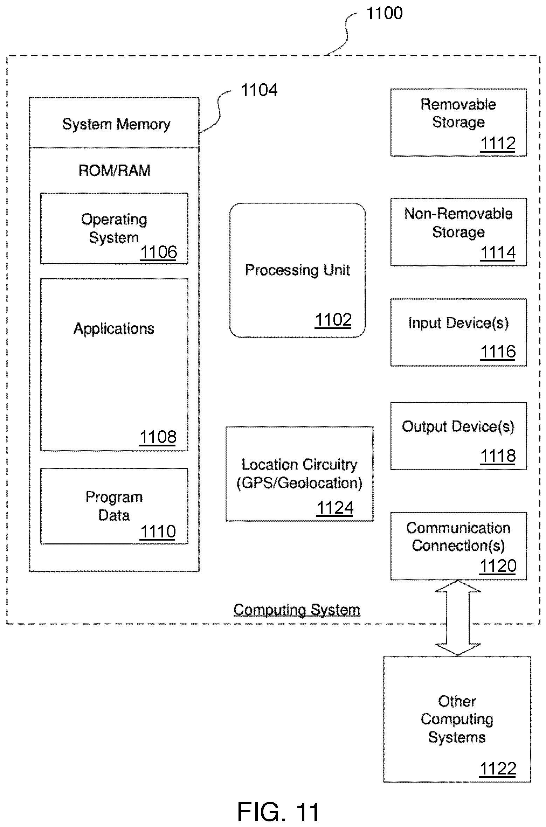

FIG. 11 is a block diagram of an example computing system 1110 of the present disclosure. The computing system 1100 may be used to implement the system 130 of FIGS. 1, 2, and 3 and/or the system 902 of FIG. 9 and/or the system 1002 of FIG. 10, as well as to perform embodiments described herein.

The computing system 1100 typically includes at least one processing unit 1102 and a system memory 1104. Depending on the particular configuration and type of computing device, the system memory 1104 may be volatile such as random-access memory (RAM), non-volatile such as read-only memory (ROM), flash memory, and the like, or some combination of volatile memory and non-volatile memory. The system memory 1104 typically maintains an operating system 1106, one or more applications 1108, and program data 1110. The operating system 1106 may include any number of operating systems executable on desktops or portable devices including, but not limited to, Linux, Microsoft Windows^{®}, Apple OS^{®}, or Android^{®}.

The computing system 1100 may also have additional features or functionality. For example, the computing system 1100 may also include additional data storage devices (removable and/or non-removable) such as, for example, magnetic disks, optical disks, tape, or flash memory. Such additional storage may include removable storage 1112 and non-removable storage 1114. Computer storage media may include volatile and non-volatile, removable and non-removable media implemented in any method or technology for storage of information, such as computer-readable instructions, data structures, program modules or other data. The system memory 1104, the removable storage 1112, and the non-removable storage 1114 are all examples of computer storage media. Available types of computer storage media include, but are not limited to, RAM, ROM, EEPROM, flash memory (in both removable and non-removable forms) or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the computing system 1100. Any such computer storage media may be part of the computing system 1100.

The computing system 1100 may also have input device(s) 1116 such as a keyboard, mouse, pen, voice input device, touchscreen input device, etc. Output device(s) 1118 such as a display, speakers, printer, short-range transceivers such as a Bluetooth transceiver, etc., may also be included. The computing system 1100 also may include one or more communication connections 1120 that allow the computing system 1100 to communicate with other computing systems 1122, such as over a wired or wireless network or via Bluetooth (a Bluetooth transceiver may be regarded as an input/output device and a communications connection). The one or more communication connections 1120 are an example of communication media. Available forms of communication media typically carry computer-readable instructions, data structures, program modules or other data in a modulated data signal such as a carrier wave or other transport mechanism and include any information delivery media. The term "modulated data signal" may include a signal that has one or more of its characteristics set or changed in such a manner as to encode information in the signal. By way of illustrative example only and not of limitation, communication media may include wired media such as a wired network or direct-wired connection, and wireless media such as acoustic, radio frequency (RF), infrared and other wireless media. The term computer-readable media as used herein includes both storage media and communication media.

The computing system 1100 may also include location circuitry 1124. In various embodiments, the location circuitry 1124 may include circuitry including global positioning system (GPS) circuitry and/or geolocation circuitry. The location circuitry 1124 may automatically discern its location based on relative positions to multiple GPS satellites and/or triangulation using cellular carrier network(s) and/or IEEE Standard 802.11 wireless (Wi-Fi) networks (collectively referred to as "geolocation services") to determine location based on multiple cellular communications facilities and/or multiple Wi-Fi networks. The location circuitry 1124, including GPS circuitry and/or geolocation circuitry, is frequently incorporated in smartphones and many other tablets or other portable devices. In various embodiments, computing system 1100 may not have all of the components shown and/or may have other elements including other types of components instead of, or in addition to, those shown herein.

Although the present disclosure is illustrated and described herein with reference to illustrative embodiments and specific examples provided, it will be readily apparent to those of ordinary skill in the art that other embodiments and examples may perform similar functions and/or achieve like results. All such equivalent embodiments and examples are within the spirit and scope of the present disclosure and are intended to be covered by the following non-limiting claims for all purposes.

## Claims

1. A connector assembly for a vehicle (102), the connector assembly comprising:
one or more cargo connectors (124) configurable to receive a cargo assembly (122, 128, 132, 302), wherein the cargo assembly (122, 128, 132, 302) is configurable to carry or tow at least one cargo item; and
one or more perception sensor devices (104, 108, 112, 116, 120, 126) associated with the one or more cargo connectors (124), wherein the one or more perception sensor devices (104, 108, 112, 116, 120, 126) communicate with a system (130) comprising one or more processors (1102) and logic encoded in one or more non-transitory computer-readable storage media for execution by the one or more processors (1102) and when executed operable to cause the one or more processors (1102) to perform operations comprising:
receiving cargo information (510) associated with the at least one cargo item to be coupled to the cargo assembly (122, 128, 132, 302);
verifying carrying and towing requirements of the vehicle (102) against the cargo information (510); and
providing cargo assembly information to a user of the vehicle (102), wherein the cargo assembly information comprises a type of cargo assembly (122, 128, 132, 302) and installation information.

2. The connector assembly according to claim 1, wherein the logic when executed is further operable to cause the one or more processors (1102) to perform operations comprising alerting the user of the vehicle (102) if the at least one cargo item does not meet the carrying and towing requirements based on the cargo information (510).

3. The connector assembly according to any of claims 1 and 2, wherein the logic when executed is further operable to cause the one or more processors (1102) to perform operations comprising:
determining that the one or more cargo connectors (124) are coupled to the cargo assembly (122, 128, 132, 302); and
verifying that a configuration of a coupling between the one or more cargo connectors (124) and the cargo assembly (122, 128, 132, 302) meets predetermined requirements.

4. The connector assembly according to any of claims 1 to 3, wherein the logic when executed is further operable to cause the one or more processors (1102) to perform operations comprising:
determining that the one or more cargo connectors (124) are coupled to the cargo assembly (122, 128, 132, 302);
determining that the cargo assembly (122, 128, 132, 302) is coupled to the at least one cargo item; and
verifying that a configuration of a coupling between the one or more cargo connectors (124) and the cargo assembly (122, 128, 132, 302) and that a configuration of a coupling between the cargo assembly (122, 128, 132, 302) and the at least one cargo item meet predetermined requirements.

5. The connector assembly according to any of claims 1 to 4, wherein the logic when executed is further operable to cause the one or more processors (1102) to perform operations comprising verifying that a configuration of a coupling between the one or more cargo connectors (124) and the cargo assembly (122, 128, 132, 302) and a configuration of a coupling between the cargo assembly (122, 128, 132, 302) and the at least one cargo item meet predetermined requirements based on one or more perception sensor devices (104, 108, 112, 116, 120, 126) associated with the one or more cargo connectors (124).

6. The connector assembly according to any of claims 1 to 5, wherein the logic when executed is further operable to cause the one or more processors (1102) to perform operations comprising:
receiving route information in association with the vehicle (102) transporting the at least one cargo item; and
modifying vehicle operating parameters for transporting the at least one cargo item based on one or more of the cargo information (510), the cargo assembly information, and the route information.

7. The connector assembly according to any of claims 1 to 6, wherein the logic when executed is further operable to cause the one or more processors (1102) to perform operations comprising:
monitoring the cargo assembly (122, 128, 132, 302) and the at least one cargo item while the vehicle (102) is transporting the at least one cargo item; and
alerting the user of the vehicle (102) to any dangerous events that arise in association with a coupling between the one or more cargo connectors (124) and the cargo assembly (122, 128, 132, 302) or in association with a coupling between the cargo assembly (122, 128, 132, 302) and the at least one cargo item.

8. The connector assembly according to any of claims 1 to 7, wherein the cargo assembly (122, 128, 132, 302) is an aftermarket cargo assembly.

9. A vehicle (102) comprising the connector assembly according to any of claims 1 to 8.

10. A computer-implemented method for ensuring proper configuration of couplings associated with connectors (124), cargo assemblies (122, 128, 132, 302), and cargo items of a vehicle (102), the method comprising:
receiving cargo information (510) associated with the at least one cargo item to be coupled to the cargo assembly (122, 128, 132, 302) (step 402);
verifying carrying and towing requirements of the vehicle (102) against the cargo information (510) (step 404); and
providing cargo assembly information to a user of the vehicle (102), wherein the cargo assembly information comprises a type of cargo assembly (122, 128, 132, 302) and installation information (step 406), wherein the one or more cargo connectors (124) are configurable to receive the cargo assembly (122, 128, 132, 302), and wherein the cargo assembly (122, 128, 132, 302) is configurable to carry or tow the at least one cargo item.

11. The method according to claim 10, further comprising alerting the user of the vehicle (102) if the at least one cargo item does not meet the carrying and towing requirements based on the cargo information (510) (step 606).

12. The method according to any of claims 10 and 11, further comprising:
determining that the one or more cargo connectors (124) are coupled to the cargo assembly (122, 128, 132, 302) (step 604); and
verifying that a configuration of a coupling between the one or more cargo connectors (124) and the cargo assembly (122, 128, 132, 302) meets predetermined requirements (step 606).

13. The method according to any of claims 10 to 12, further comprising:
determining that the one or more cargo connectors (124) are coupled to the cargo assembly (122, 128, 132, 302) (step 604);
determining that the cargo assembly (122, 128, 132, 302) is coupled to the at least one cargo item (step 604); and
verifying that a configuration of a coupling between the one or more cargo connectors (124) and the cargo assembly (122, 128, 132, 302) and that a configuration of a coupling between the cargo assembly (122, 128, 132, 302) and the at least one cargo item meet predetermined requirements (step 606).
